# EUROPEAN PATENT APPLICATION

(11) **EP 1 304 888 A1**
(43) Date of publication of application: **23.04.2003**
(21) Application number: 01931719.7
(22) Date of filing: 23.05.2001
(51) Int. Cl.: H04Q 1/18

(54) **REAL TIME MODULAR SWITCHING SYSTEM FOR ELECTRONIC COMMUNICATION DEVICES**

(30) Priority: 24.05.2000 ES 200001307
(71) Applicant: Centro Espanol de Servicios Telematicos, S.A., 28500 Arganda Del Rey (ES)
(72) Inventor: ORTIZ GARCIA, Fernando, E-28500 Arganda Del Rey (ES)
(74) Representative: Cobas Horcajo, Susana
(86) International application number: ES0100204
(87) International publication number: WO01091477

(57) **Abstract**

Modular real time switching system for electronic communications equipment, as much for production as for backup, intended for those centers that because of their critical nature require uninterrupted service or operation. The system allows changes in topology in times of emergency or simply the ability to conduct testing for incorporating new services or products in a very reduced period of time.

The system consists of input/output line interfaces (LE)/(LS), control bus (BC), switched power source (FAC) and an integrated control and monitoring microprocessor system, as well as external control programs.

## Description

### PURPOSE OF THE INVENTION

This invention refers to a modular real time switching system for electronic communications equipment, for use in those cases in which it is a priority to maintain uninterrupted communications while at the same time allowing cabling topology changes in cases of emergency.

### BACKGROUND OF THE INVENTION

It has been noted that there is a very concrete need in the world of call centers, emergency centers (061, 112), citizen information centers (010, etc.) or value-added provider centers (surveys, 900, 901, 903, 904, 905, 906) which due to their critical nature must ensure uninterrupted service 24/24 365/365.

These types of centers have redundancy elements, both at the computer system level (with CTI integration linked by LAN/WAN using TCP/IP) and at the telephone system level (PABX, ACD's, IVR's, etc.) Generally, there are also first and second level operators, groups of agents undergoing training, trial period positions, etc.

In any case, topology changes are often needed in cases of emergency (system crashes and switch-over to backup or emergency systems) or simply in order to perform testing for the incorporation of new services or products. Depending on the nature of the topology, the time it takes for reconfiguration can be of little importance, great importance, or critical importance, generally the latter.

In call centers, the typical architecture/topology changes that need to be undertaken in those cases are, for example:
- Connect agents linked to the primary ACD (automatic call distributor) (that has stopped) to the backup ACD.
- Connect the input lines of the production telephone system (analog, digital, radio channels, etc.) to the emergency system (backup).
- Isolate a group of input lines and/or agents to create a group for testing or for training of new agents in the call center/emergency center.
- Physically switch all of the input/output/data lines from one ACD/PABX to another.

Or in other, more specific cases such as:
- Switch network segments to isolate a defective hub or switch.
- Share a group of radio devices between two independent systems.
- Automatically change the topology of the call center depending on the time of the day.
- Instantly make and undo topology changes to carry out testing.

These changes entail a whole series of modifications that affect as much the "system software" configuration...:
- Change in TCP/IP routing for agents and network servers.
- Change in agent logins, etc.
- Change in radio equipment configuration profiles .../... as they affect the physical configuration of the center's cabling:
- Physically connect and disconnect the agents' headsets or telephones in the "patch panel."
- Physically connect and disconnect the incoming telephone lines in the "patch panel."
- Physically connect and disconnect all of the radio equipment cables from one system to another.
- Physically connect and disconnect other peripherals (electronic control panels, printers, serial control ports, etc.) from one system to another.

Until now this process, above all the manual one, could involve dozens of minutes or even hours of work, with a list in hand, inserting and removing RJ-11, RJ-45, BNC, DB-9, DB-25, DB-50, etc. connectors in the "patch panel."

It is of no value to have a "Fault Tolerant" system that starts the backup equipment in seconds, if the physical connection of this equipment takes hours and is subject to errors.

### DESCRIPTION OF THE INVENTION

The modular real time switching system for electronic communications equipment proposed by the invention is configured using a determined number of basic modules, each one consisting of the functional association of input/output line interfaces, control bus, switched power supply and integrated monitoring and control microprocessor system, or microcontroller, and integrated external control computer system.

Each module of the invention is equipped with an independent power supply, a microcontroller, a supervision watchdog, a set of switches for manual operation, 8 RJ-45 input connectors and 16 RJ-45 output connectors. An external controller computer (optional) can be connected through an RS-232 port or USB. On the front of the case, indicator lights show the status of the switches, supply voltage and switched circuits at all times.

Additionally, the invention provides an insulated contact that allows the switching of a 250V/5A charge. This outlet can be used to switch to uninterrupted power supply (UPS) devices or to activate room audio alarms that indicate movement to emergency situations.

The invention furthermore includes an advanced control program that allows the definition of architecture changes programmed using development tools (libraries for Unix, DLL's for Windows and ActiveX controls) and a specific language.

The system is, on the whole, a modular product that is mounted in standard 19" closets, with a height of 2U. Different modules can be combined to obtain the desired configuration, being linked by an internal bus such that only one of them connects to the external control/monitoring system.

The system physically switches the different input/output connectors using highly reliable relays, whether in block or one by one. Its thorough design ensures, in any event, impedance matching of the voice and data devices connected to it, respecting the norms regarding electromagnetic interference (EMI).

For all types of use, the system performs the switching automatically, without human intervention; as a result, it is not necessary to perform cabling reconfigurations "by hand."

This way, savings are achieved in the cabling process for systems of various orders of magnitude. In effect, manually recabling an ACD or telecommunications system can take dozens of minutes or hours. With the proposed system, this process and the following software configuration becomes a question of seconds.

### DESCRIPTION OF THE DRAWINGS

To complement the description being presented and to help achieve a better understanding of the characteristics of the invention, accompanying this specification and forming an integral part of it, is a set of drawings, intended to be of an illustrative but not limiting nature, that depict the following:
Figure 1, shows a diagram of each of the basic modules that comprise the system of the invention.
Figure 2, shows a view of one of the modules in accordance with the practical embodiment of the invention, just as it is ready for assembly.

### PREFERRED EMBODIMENT OF THE INVENTION

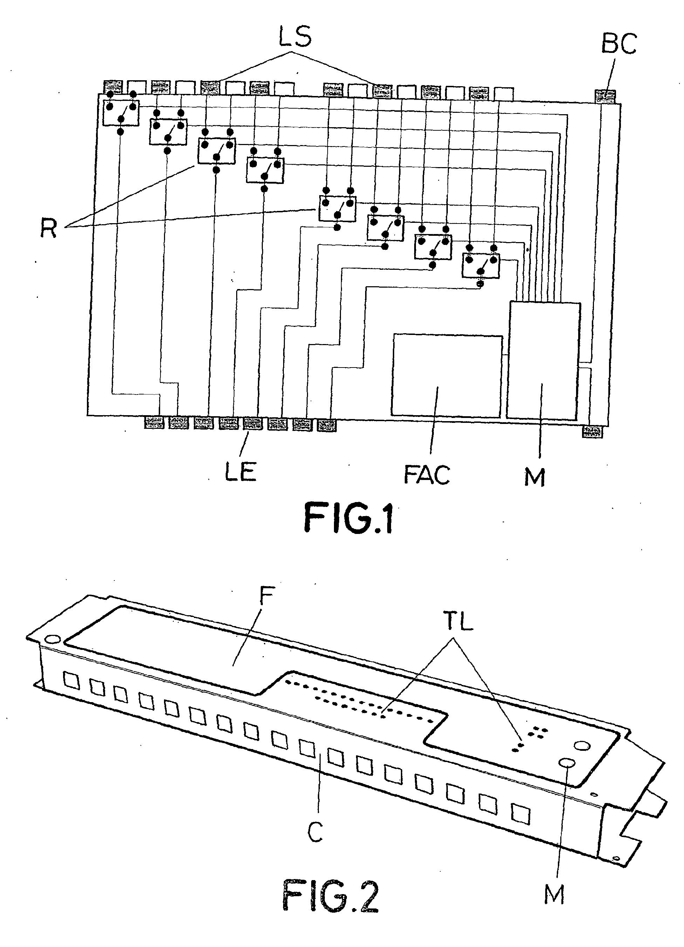

Looking at figure 1, it can be observed that the modular real time switching system for electronic communications equipment being advocated is configured using a determined number of basic modules, each one consisting of the functional association of input/output line interfaces (LE/LS), control bus (BC), switched power source (FAC) and an integrated control and monitoring microprocessor system, or microcontroller (M), and an integrated external control computer system.

Each module of the invention (figure 2) is equipped with an independent switched power supply, a microcontroller, a supervision watchdog, a set of switches for manual operation (M), 8 RJ-45 input connectors, situated on the reverse side of said figure 2, and 16 RJ-45 output connectors (C). An external controller computer (optional) can be connected through an RS-232 port or USB. On the front of the case, indicator lights (TL) show the status of the switches, supply voltage and switched circuits at all times.

The system physically switches the different input/output connectors (C) using highly reliable relays (R), whether in block or one by one The system allows the switching of all types of cabling, for example:
- Analog RJ-11 lines.
- BRI-IDSN, RJ-45 digital telephone lines.
- PRI-IDSN trunk lines or E1 lines, F or BCN connectors.
- Serial port multiplex systems (Specialix, Digiboard, etc.).
- Radio equipment with E&M signaling.
- Network segments. This switching can be performed automatically and intelligently according to the programming of the microcontroller included in the system.
- Automatic switching using a PC: a Unix program or Window service or any program can decide the total or partial switching of elements connected to the invention via a guided configuration menu.

Manual switching is also allowed, intended for non-specialized users:
- Manual switching using a switch: Informs a monitoring computer that, with a powerful, specific language, allows the updating of the computer system's configuration files and tables.
- Manual switching from a computer: An operator may decide the total or partial switching of elements connected to the invention via a guided configuration menu.

## Claims

1. Modular real time switching system for electronic communications equipment, **characterized in that** it is configured using a determined number of basic modules, each one consisting of the functional association of input/output line interfaces (LE)/(LS), control bus (BC), switched power source (FAC) and an integrated control and monitoring microprocessor system, or microcontroller (M), and an integrated external control computer system, including, as well, supervisory and overall control elements.

2. Modular real time switching system for electronic communications equipment, according to claim 1, **characterized in that** each module is equipped with an independent switched power supply, a microcontroller, a supervision watchdog, a set of switches for manual operation (M), 8 RJ-45 input connectors and 16 RJ-45 output connectors (C), and also being equipped with indicator lights (TL) on the front (F) of the case to show the status of the switches, supply voltage and switched circuits at all times.
